# EUROPÄISCHE PATENTANMELDUNG

(11) **EP 3 144 545 A1**
(43) Veröffentlichungstag der Anmeldung: **22.03.2017**
(21) Anmeldenummer: 16188314.5
(22) Anmeldetag: 12.09.2016
(51) Int. Cl.: F16B 13/14

(54) **BEFESTIGUNGSANORDNUNG**

(30) Priorität: 18.09.2015 DE 102015115833
(71) Anmelder: fischerwerke GmbH & Co. KG, 72178 Waldachtal (DE)
(72) Erfinder: Schätzle, Joachim, 79341 Kenzingen (DE); Zhu, Feng, 72250 Freudenstadt (DE); Kappel, Roland, 76744 Wörth (DE); Tesari, Iwiza, 76149 Karlsruhe (DE)
(74) Vertreter: Suchy, Ulrich Johannes

(57) **Zusammenfassung**

Die Erfindung betrifft eine Befestigungsanordnung (1) mit einem Bohrloch (4) mit einer chemisch verankerten Hülse (5) und einer in die Hülse (5) geschraubten Ankerstange (16). Um die Haltewerte zu verbessern, schlägt die Erfindung vor, dass die Ankerstange (16) nur in der vorderen Hälfte über ein Innengewinde (13) mit der Hülse (5) verbunden ist. Die Kraftübertragung zwischen Hülse (5) und ausgehärteter Masse (6) erfolgt dagegen mittels Hinterschneidungen (9) über die gesamte Länge der Hülse (5). Hierdurch werden die auftretenden Spannungen gleichmäßiger über die Länge des Bohrlochs (4) verteilt.

## Beschreibung

Die Erfindung betrifft eine Befestigungsanordnung mit den Merkmalen des Oberbegriffs des Anspruchs 1.

Zur Befestigung an einer Wand, Decke oder Boden, beispielsweise aus Beton, ist es seit langem bekannt, Innengewindehülsen chemisch in einem Bohrloch zu verankern. Der Vorteil derartiger Befestigungselemente liegt darin, dass die Innengewindehülsen nicht über das Bohrloch hinausstehen und nach dem Aushärten der chemischen Befestigungsmasse auf einfache Weise mit einer insbesondere metrischen Schraube ein zu befestigender Gegenstand befestigt werden kann. Die Druckschrift US 5,562,377 zeigt beispielhaft eine derart erstellte Befestigungsanordnung. Die Druckschrift zeigt auch, dass die Innengewindehülse nicht unbedingt bündig mit dem Bohrlochmund gesetzt werden muss. Dies ist auch aus der Druckschrift EP 1 182 362 A2 bekannt, bei der die Innengewindehülse tief ins Bohrloch geschoben wird. Um die Innengewindehülse zu handhaben und eine Art Kanal für die Schraube vom Bohrlochmund bis zur Innengewindehülse von der aushärtbaren Masse freizuhalten, schlägt die Druckschrift EP 1 182 362 A2 ein Röhrchen vor, dass sich an das Innengewinde anschließt, das gegebenenfalls jedoch nach dem Aushärten entfernt werden kann, da es zur Lastabtragung nicht beiträgt.

Der Erfindung liegt die Aufgabe zugrunde, eine derartige Befestigungsanordnung mit erhöhten Haltewerten zu schaffen.

Diese Aufgabe wird erfindungsgemäß durch die Merkmale des Anspruchs 1 gelöst. Die erfindungsgemäße Befestigungsanordnung weist ein Bohrloch in einem Befestigungsgrund, beispielsweise ein Mauerwerk oder Beton, auf. In dem Bohrloch ist eine Hülse mittels einer ausgehärteten Masse chemisch verankert.

Die Hülse ist insbesondere im Wesentlichen über den Umfang geschlossen. Unabhängig davon ist sie außerdem inbesondere vorne geschlossen. "Vorne" bezieht sich hier auf die Einbringrichtung der Hülse in das Bohrloch. Außerdem ist die Hülse insbesondere einstückig. Die Hülse weist erfindungsgemäß außen einen Verankerungsabschnitt mit Hinterschneidungen auf. Der Begriff "Hinterschneidungen" bezieht sich dabei auf einen möglichen Auszug der Hülse aus dem Bohrloch entgegen der Einbringrichtung. Die Hinterschneidungen sind insbesondere makroskopisch, beispielsweise als Profilierung, Rändelung oder Gewinde ausgeführt. Alternativ oder zusätzlich können die Hinterschneidungen auch mikroskopisch, beispielsweise als gezielte Aufrauhung ausgeführt sein. Als "gezielte Aufrauhung" ist eine gegenüber anderen Flächen, beispielsweise einer hinteren Stirnfläche, erhöhte Rauigkeit gemeint. Die Hinterschneidungen sind insbesondere über den gesamten Verankerungsabschnitt verteilt.

Die Befestigungsanordnung umfasst außerdem eine Ankerstange, die insbesondere als Gewindestange oder Schraube ausgeführt ist. Die Ankerstange ragt mit einem vorderen Ende in die Hülse hinein und mit einem hinteren Ende aus der Hülse und insbesondere auch aus dem Bohrloch heraus. Im Falle einer aus dem Bohrloch ragenden Gewindestange als Ankerstange kann ein zu befestigender Gegenstand mit einem Durchgangsloch über das hintere Ende gestülpt und mittels einer Mutter befestigt werden.

Die Ankerstange und die Hülse sind in einem vorderen Abschnitt der Hülse über Verbindungsmittel axialfest miteinander verbunden. In einem hinteren Abschnitt der Hülse besteht dagegen keine axialfeste Verbindung, insbesondere ist auch keine ausgehärtete Masse im hinteren Abschnitt zwischen Ankerstange und Hülse angeordnet. Der hintere Abschnitt erstreckt sich dabei bis zum hinteren Ende der Hülse und schließt sich im Wesentlichen unmittelbar an den vorderen Abschnitt an. Der vordere Abschnitt erstreckt sich insbesondere im Wesentlichen bis zum vorderen Ende der Hülse. Die Hülse kann, muss jedoch nicht über den Bohrlochmund hinausstehen, beispielsweise wenn die Hülse zur Abstützung des zu befestigenden Gegenstandes gegen in radialer Richtung wirkenden Querkräften dient. "Axialfest" meint hier eine feste Verbindung gegen eine Bewegung in Achsrichtung, wobei unter Umständen eine Richtung genügt, die Verbindung also lediglich zugfest ist. Die Verbindungsmittel sind vorzugsweise als ein Innengewinde in der Hülse und ein Außengewinde an der Ankerstange ausgeführt. Alternativ sind jedoch auch andere formschlüssige Verbindungen, beispielsweise eine Bayonettverbindung, kraftschlüssige Verbindungen, beispielsweise eine Pressverbindung, oder eine stoffschlüssige Verbindung, beispielsweise eine Klebeverbindung, möglich. Die Verbindungsmittel erstrecken sich insbesondere im Wesentlichen über die gesamte Länge des vorderen Abschnitts.

Erfindungsgemäß erstreckt sich der Verankerungsabschnitt im Wesentlichen bis zum Bohrlochmund. Mit "im Wesentlichen" ist hier gemeint, dass es beispielsweise durch eine leicht vertieft gesetzte Hülse zu einem sogenannten "Unterstand" kommen kann. Die Tiefe des Unterstands, gemessen zu einer Außenfläche des Befestigungsgrunds, beträgt jedoch erfindungsgemäß nicht mehr als der Durchmesser des Bohrlochs. Durch die erfindungsgemäße Kombination mit einer Verbindung von Ankerstange und Hülse in einem vorderen Abschnitt wird eine deutlich verbesserte Krafteinleitung in das Bohrloch und damit höhere Haltewerte erreicht. Bei einer Befestigungsanordnung nach dem Stand der Technik, bei der sich sowohl die Verbindung von Ankerstange und Hülse als auch der Verankerungsabschnitt über die gesamte Länge der Hülse erstreckt, erfolgt die Krafteinleitung im Wesentlichen im Bereich des Bohrlochmundes. Dies zeigt sich daran, dass durch eine größere Länge kaum eine Erhöhung der Tragkraft erreicht wird. Auch kann dies durch numerische Berechnungen gezeigt werden. Wird sowohl der Verankerungsabschnitt als auch die Verbindung von Ankerstange und Hülse tiefer in das Bohrloch versetzt, wie dies die Druckschrift EP 1 182 362 A2 vorschlägt, so erfolgt tatsächlich auch die Krafteinleitung tiefer im Bohrloch. Im Rahmen der Erfindung hat sich jedoch gezeigt, dass gegenüber einer konzentrierten Krafteinleitung in der Tiefe des Bohrlochs durch die erfindungsgemäße Kombination (Verbindung von Ankerstange und Hülse in einem vorderen Abschnitt sowie Verankerungsabschnitt bis zum Bohrlochmund) eine gleichmäßigere Krafteinleitung über die gesamte Länge der Hülse erzielt wird. Hierdurch werden Spannungsspitzen vermieden, die ab einer bestimmten Last zum Versagen führen. Durch die erfindungsgemäße Befestigungsanordnung können somit höhere Haltewerte erreicht werden.

Vorzugsweise beträgt die Länge des hinteren Abschnitts mindestens 10 Prozent, vorzugsweise mindestens 20 Prozent und insbesondere mindestens 30 Prozent der Tiefe beträgt, wobei die Tiefe vom Bohrlochmund bis zu einem vorderen Ende der Hülse gemessen wird. Hierdurch wird erreicht, dass Zugkräfte, die im vorderen Abschnitt von der Ankerstange auf die Hülse übertragen werden, innerhalb der Hülse so verteilt werden, dass sie sich nicht im Bereich des Bohrlochmundes konzentrieren.

Um außerdem eine Spannungskonzentration im vorderen Bereich der Hülse zu vermeiden, schlägt die Erfindung zudem vor, dass die Länge des vorderen Abschnitts mindestens 10 Prozent, vorzugsweise mindestens 20 Prozent und insbesondere mindestens 30 Prozent der Tiefe beträgt, wobei die Tiefe wiederum vom Bohrlochmund bis zu einem vorderen Ende der Hülse gemessen wird. Hieraus ergibt sich auch, dass eine Verbindung mit einem Innengewinde in der Hülse und ein Außengewinde an der Ankerstange über eine Länge von 30 bis 70 Prozent, insbesondere von 40 bis 60 Prozent der Tiefe, zu einer einfachen und sehr tragfähigen Befestigungsanordnung führt.

Die Erfindung wird nachfolgend anhand eines Ausführungsbeispiels erläutert.

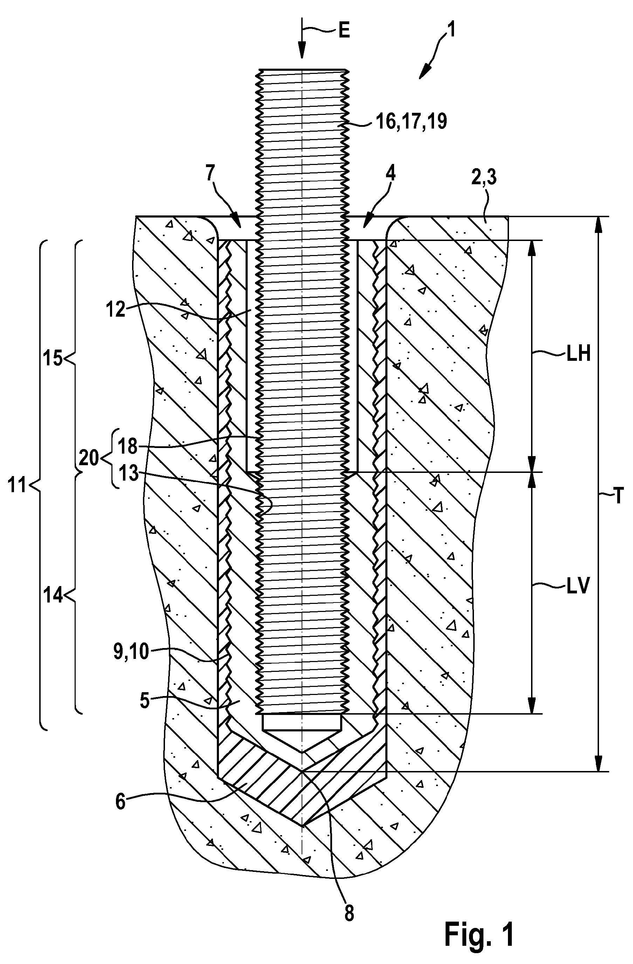

Die einzige Figur zeigt eine Schnittzeichnung einer erfindungsgemäßen Befestigungsanordnung 1.

Die Befestigungsanordnung 1 dient der Befestigung eines Gegenstandes (nicht dargestellt) an einem Befestigungsgrund 2, hier ein Betonkörper 3. In den Befestigungsgrund 2 ist zunächst ein Bohrloch 4 gebohrt und hierein eine zweikomponentige Befestigungsmasse eingebracht worden. Die Befestigungsmasse ist hier aus einer Kartusche (nicht dargestellt) injiziert worden. Alternativ könnte sie mittels einer Patrone in das Bohrloch 4 eingesteckt werden. Anschließend wurde eine Hülse 5 aus Stahl in das Bohrloch 4 gesteckt. Hierdurch wurde die noch flüssige Befestigungsmasse derart verdrängt, dass sie die Hülse 5 im Wesentlichen über die gesamte Länge umschließt. Durch chemisches Aushärten hat sich aus der Befestigungsmasse eine ausgehärtete Masse 6 gebildet. Die Hülse 5 steckt leicht vertieft gegenüber dem Bohrlochmund 7 im Bohrloch 4. Die Hülse 5 weist einen geschlossenen Umfang und ein geschlossenes vorderes Ende 8 auf. "Vorne" und "hinten" bezieht sich hier auf die Einbringrichtung E der Hülse 5 in das Bohrloch 4. Am Umfang weist die Hülse 5 Hinterschneidungen 9 in Form einer Rändelung 10 auf, die Hinterschneidungen 9 sind im Wesentlichen über die gesamte Länge der Hülse 5 verteilt und definieren einen Verankerungsabschnitt 11. Der Verankerungsabschnitt 11 erstreckt sich somit im Wesentlichen bis zum Bohrlochmund 7. Im Inneren weist die Hülse 5 eine gestufte Bohrung 12 auf. Im vorderen Teil, der sich in etwa über die vordere Hälfte der Hülse 5 erstreckt, ist ein Innengewinde 13 angeordnet, das einen vorderen Abschnitt 14 der Hülse 5 definiert. Dahinter ist die Bohrung 12 zylindrisch erweitert und bildet einen hinteren Abschnitt 15 der Hülse 5. Die Länge LV des vorderen Abschnitts 14 und die Länge LH des hinteren Abschnitts 15 der Hülse 5 betragen jeweils etwa 40 Prozent einer Tiefe T, wobei die Tiefe T vom Bohrlochmund 7 bis zum vorderen Ende 8 der Hülse 5 gemessen wird.

In das Innengewinde 13 der Hülse 5 ist eine Ankerstange 16 in Form einer Gewindestange 17 aus Stahl mit einem durchgehenden metrischen Außengewinde 18 eingeschraubt. Die Gewindestange 17 ragt durch den hinteren Abschnitt 15 hindurch, ohne hier jedoch Kontakt zur Hülse 5 zu haben, und mit einem hinteren Ende 19 bis aus dem Bohrloch 4 hinaus. Über die Gewindestange 17 kann ein zu befestigender Gegenstand mit einer entsprechenden Durchgangsbohrung gestülpt werden und mittels einer Unterlegscheibe und einer Mutter (nicht dargestellt) an der Gewindestange 17 befestigt werden. Das Innengewinde 13 bildet zusammen mit dem Außengewinde 18 ein Verbindungsmittel 20 zur axialfesten Verbindung der Ankerstange 16 mit der Hülse 5.

Wird die Ankerstange 16 durch Zugkräfte belastet, beispielsweise weil an dem Gegenstand Windsogkräfte wirken, so werden die Zugkräfte über die Verbindungsmittel 20 auf die Hülse 5 übertragen, und zwar im vorderen Abschnitt 14 der Hülse 5. Die Elastizität des Stahls von Ankerstange 16 und Hülse 5 sorgt dafür, dass sich die resultierenden Spannungen zunächst in der Hülse 5 und dann im Bereich des gesamten Verankerungsabschnitts 11 verteilen, so dass es zu geringeren Spannungsspitzen kommt, als dies aus dem Stand der Technik bekannt ist. Somit können höhere Lasten getragen, also höhere Haltewerte erreicht werden.

### Bezugszeichenliste

### Befestigungsanordnung

- 1: Befestigungsanordnung
- 2: Befestigungsgrund
- 3: Betonkörper
- 4: Bohrloch
- 5: Hülse
- 6: ausgehärtete Masse
- 7: Bohrlochmund
- 8: vorderes Ende der Hülse 5
- 9: Hinterschneidung
- 10: Rändelung
- 11: Verankerungsabschnitt der Hülse 5
- 12: Bohrung in der Hülse 5
- 13: Innengewinde
- 14: vorderer Abschnitt der Hülse 5
- 15: hinterer Abschnitt der Hülse 5
- 16: Ankerstange
- 17: Gewindestange
- 18: Außengewinde
- 19: hinteres Ende der Ankerstange 16
- 20: Verbindungsmittel

- E: Einbringrichtung
- LH: Länge des hinteren Abschnitts 15 der Hülse 5
- LV: Länge des vorderen Abschnitts 14 der Hülse 5
- T: Tiefe

## Patentansprüche

1. Befestigungsanordnung (1) mit einem Bohrloch (4) in einem Befestigungsgrund (2), mit einer Hülse (5) und mit einer Ankerstange (16),
wobei die Hülse (5) in dem Bohrloch (4) mittels einer ausgehärteten Masse (6) chemisch verankert ist,
wobei die Hülse (5) außen einen Verankerungsabschnitt (11) mit Hinterschneidungen (9) aufweist,
wobei die Ankerstange (16) mit einem vorderen Ende (8) in die Hülse (5) hineinragt und mit einem hinteren Ende (19) aus der Hülse (5) herausragt,
wobei die Hülse (5) und die Ankerstange (16) in einem vorderen Abschnitt (14) der Hülse (5) über Verbindungsmittel (20) axialfest miteinander verbunden sind, und wobei die Hülse (5) einen hinteren Abschnitt (15) aufweist, in dem keine axialfeste Verbindung zwischen der Hülse (5) und der Ankerstange (16) besteht, **dadurch gekennzeichnet, dass** der Verankerungsabschnitt (11) sich im Wesentlichen bis zum Bohrlochmund (7) erstreckt.

2. Befestigungsanordnung nach Anspruch 1, **dadurch gekennzeichnet, dass** die Länge (LH) des hinteren Abschnitts (15) mindestens 10 Prozent, vorzugsweise mindestens 20 Prozent und insbesondere mindestens 30 Prozent der Tiefe (T) beträgt, wobei die Tiefe (T) von einem Bohrlochmund (7) bis zu einem vorderen Ende (8) der Hülse (5) gemessen wird.

3. Befestigungsanordnung nach einem der vorhergehenden Ansprüche, **dadurch gekennzeichnet, dass** die Länge (LV) des vorderen Abschnitts (14) mindestens 10 Prozent, vorzugsweise mindestens 20 Prozent und insbesondere mindestens 30 Prozent der Tiefe (T) beträgt, wobei die Tiefe (T) von einem Bohrlochmund (7) bis zu einem vorderen Ende (8) der Hülse (5) gemessen wird.

4. Befestigungsanordnung nach einem der vorhergehenden Ansprüche, **dadurch gekennzeichnet, dass** die Hülse (5) und die Ankerstange (16) im vorderen Abschnitt (14) der Hülse (5) über ein Innengewinde (13) in der Hülse (5) und ein Außengewinde (18) an der Ankerstange (16) als Verbindungsmittel (20) axialfest miteinander verbunden sind.
